Europäisches Patentamt

European Patent Office

Office européen des brevets

(11) Numéro de publication: **0 337 845**
**A1**

# (12) DEMANDE DE BREVET EUROPEEN

(21) Numéro de dépôt: 89400886.1

(22) Date de dépôt: 30.03.89

(51) Int. Cl.⁴: **F 16 B 7/04**

(30) Priorité: 05.04.88 FR 8804432

(43) Date de publication de la demande:
18.10.89 Bulletin 89/42

(84) Etats contractants désignés:
AT BE CH DE ES FR GB GR IT LI LU NL SE

(71) Demandeur: **SODEM S.A.**
**Le Mesnil-Simon**
**F-28260 Anet (FR)**

(72) Inventeur: **Gamin, Claude**
**8, rue de Chateaubriand**
**F-92500 Rueil-Malmaison (FR)**

(74) Mandataire: **Kügele, Bernhard**
**NOVAPAT-CABINET CHEREAU 63 bis, boulevard**
**Bessiéres**
**F-75017 Paris (FR)**

(54) Elément de fixation pour assemblage de profilés en structures multidimentionnelles.

(57) La présente invention concerne un élément de fixation pour l'assemblage de profilés (40, 44) en structures multidimensionnelles comportant un élément de pince (1) constitué de deux vantaux (2, 3) capables d'être écartés l'un par rapport à l'autre par un ergot excentrique (6), et un élément de repère constitué par deux barres (4, 5) reliées l'une à l'autre à distance constante par des plaques latérales (7, 8). La rotation de l'ergot excentrique (6) d'un quart de tour produit un déplacement relatif entre l'élément de pince (1) et l'élément de repère (4, 5, 7, 8). Ce déplacement relatif est transformé en un écartement des deux vantaux (2, 3). Pour l'assemblage des profilés tubulaires, l'élément de fixation selon la présente invention est positionné de façon fixe dans un logement d'un profilé (40) de façon à laisser en saillie une extrémité avant de l'élément de fixation, constituée par deux lèvres (12, 13) capables d'être séparées lors du mouvement décrit. L'écartement des lèvres (12, 13) est utilisé pour s'engager dans une partie latérale d'un deuxième profilé (44).

L'élément de fixation selon la présente invention comporte les avantages de fermeture rigide par un quart de tour ainsi que l'écartement de la position du moyen de serrage (6) de la région de jonction entre les profilés.

Fig. 1

EP 0 337 845 A1

## Description

La présente invention a trait à un élément de fixation pour l'assemblage de profilés en structure multidimensionnelle comportant un élément de pinces et un élément de serrage, l'élément de pinces comprenant deux vantaux capables d'être écartés l'un de l'autre lors de l'actionnement de l'élément de serrage, l'élément de fixation étant capable d'être inséré dans un logement longitudinal d'un profilé de façon à laisser en saillie une extrémité dudit élément de fixation, extrémité comportant deux lèvres séparables, une solidaire à chaque vantail de l'élément de pinces et capables d'être écartées l'une de l'autre lors de l'actionnement de l'élément de serrage de façon à s'engager dans une partie latérale d'un autre profilé.

Il existe des éléments de fixation comme décrit ci-dessus, qui sont commercialisés actuellement par la demanderesse et qui sont décrits par exemple,dans les catalogues SODEM 1988, page 16, sous la référence "Pinces (CBX)". Les pinces décrites dans ce prospectus comportent deux profilés en aluminium qui forment deux vantaux, pouvant être écartés au moyen d'une vis qui pénètre un vantail, et dont la partie avant s'appuie contre la face intérieure du deuxième vantail de façon à le faire pivoter lors de la progression de la vis.

Ce genre de fixation du type pince est inséré dans un logement adapté d'un profilé tubulaire qui comporte un trou latéral par lequel la vis peut être insérée après avoir aligné l'alésage fileté de la pince sensiblement à fleur du trou dans le profilé tubulaire. Une fois que la vis est insérée dans ce trou, elle assume une double fonction : 1°) l'écartement de deux vantaux de la pince et 2°) la fixation latérale de la pince dans le logement du profilé tubulaire au moyen d'une partie saillante de la vis qui coopère avec le trou du profilé tubulaire.

La pince décrite est insérée dans le logement du profilé tubulaire afin de laisser en saillie uniquement son extrémité avant constituée des deux lèvres séparables lors de l'actionnement de la vis, lèvres ayant un profilé qui est capable de coopérer avec une partie latérale d'un autre profilé tubulaire afin de solidariser ce dernier au premier profilé tubulaire qui loge la pince, lors de l'écartement desdites lèvres.

Malgré que la fiabilité de ce genre de fixation réponde à toutes exigences, et le prix étant tout à fait avantageux, il reste toutefois deux inconvénients d'une telle fixation au niveau de la manipulation lors de l'assemblage :
- le serrage de la vis nécessite plusieurs tours complets de la vis afin d'obtenir l'écartement désiré des deux lèvres et
- le positionnement de la vis est nécessairement très proche de la jonction entre les deux profilés à solidariser, proximité qui peut conduire à une difficulté au niveau de l'actionnement de la vis notamment à la fabrication des structures à trois dimensions qui nécessitent des fois une connexion entre plusieurs profilés tubulaires au même endroit.

Le but de la présente invention est de remédier à ces deux inconvénients et de créer un élément de fixation qui peut être utilisé dans le même environnement et, notamment, les mêmes profilés tubulaires qui sont actuellement joints par des éléments de pinces comme décrit ci-dessus, éléments de fixation qui permettent un serrage rapide et dont les points d'actionnement sont suffisamment écartés des endroits de jonction entre plusieurs profilés tubulaires.

Ces buts sont atteints avec la création d'un élément de fixation selon la présente invention qui est caractérisé en ce que l'élément de fixation comporte un système de verrouillage à quart de tour comprenant un ergot excentrique coopérant avec un moyen de repère ayant un premier élément de coopération avec ledit ergot et un deuxième élément coopérant avec les deux vantaux afin de les écarter lors d'une rotation de l'ergot, les deux éléments de coopération étant reliés l'un avec l'autre pour assurer le maintien de leur distance relative, ledit ergot étant positionné dans la partie de l'élément de pince la plus écartée de ladite extrémité saillante,le deuxième élément de coopération avec l'élément de pince entraînant le pivotement des deux vantaux lors d'un déplacement de l'élément de repère à la suite d'une rotation de l'élément de serrage.

Les deux éléments de coopération qui sont maintenus à une distance relative fixe sont constitués par des barres qui sont reçues dans des logements de l'élément de pinces. Ils sont reliés l'un avec l'autre par deux plaques latérales qui sont solidarisées d'un côté et de l'autre aux extrémités latérales de ces éléments de coopération. Pour permettre une telle solidarisation des plaques latérales aux extrémités latérales des éléments de coopération lesdites plaques latérales comportent chacune deux trous pour recevoir de façon solidaire les extrémités latérales des éléments de coopération en forme de barres, la solidarisation des extrémités latérales de ces barres dans les trous pouvant être effectuée selon une technique classique qui n'est pas décrite en détail dans ce qui suit. Alternativement, dans certaines conditions, l'engagement des extrémités des barres dans ces trous peut être de façon amovible.

L'élément de pinces de l'élément de fixation selon la présente invention est constitué de deux profilés complémentaires qui constituent un vantail principal et un vantail pivotant. Il sera clair lors de la lecture de la description détaillée qui suit, que l'écartement des deux vantaux par l'actionnement de l'élément de serrage est un écartement relatif entre les deux vantaux, de sorte que les deux vantaux subissent un certain mouvement de pivotement et la terminologie de vantail principal et de vantail pivotant n'est utilisée que pour des raisons de distinction sans préjudice dans le sens que le vantail principal soit stationnaire.

Pour permettre un pivotement relatif entre les deux vantaux de l'élément de pince, ces derniers comportent un palier de pivotement ainsi qu'un moyen d'amortissement qui agit dans le sens contre l'écartement des deux vantaux. Le palier de pivotement comporte une partie saillante pratiquée au vantail stationnaire et dirigée vers le vantail pivotant, cette partie saillante comportant un bord de pivotement qui est logé dans une gorge pratiquée dans le vantail pivotant.

Les logements pour les éléments de coopération en forme de barres et les barres elles-mêmes sont orientées de façon parallèle par rapport au sens longitudinal des profilés qui forment les vantaux de l'élément de pinces, le sens longitudinal des profilés étant entendu comme la direction d'extrusion de ces profilés.

Selon une forme particulière de la présente invention, le logement recevant l'élément coopérant avec l'élément de pinces comporte une partie cylindrique située du côté proche à l'extrémité avant de l'élément de pinces, extrémité qui est constituée des lèvres séparables lors d'un pivotement relatif de l'élément principal et de l'élément pivotant de la pince, et une partie défilant qui coopère avec le deuxième élément de coopération en forme de barre reçu dans ce logement, de façon à entraîner un pivotement relatif entre le vantail pivotant et le vantail principal lorsque l'élément de coopération avec la pince est déplacé dans un premier sens, et permettant le rapprochement relatif des deux vantaux lorsque l'élément de coopération avec la pince est déplacé vers le sens opposé.

Le logement qui reçoit l'élément de coopération avec l'ergot excentrique est constitué par le fond d'une fente formée entre les deux extrémités d'une partie en U, qui forme, elle-même, l'extrémité arrière du vantail principal. Lors d'une rotation de l'ergot excentrique, l'élément de coopération avec ledit ergot excentrique est poussé dans un sens ou un autre, effectuant ainsi un écartement, ou un rapprochement entre les vantaux.

Afin de mettre en coopération l'ergot excentrique, et l'élément de coopération avec cet ergot excentrique, l'extrémité arrière du vantail principal comporte un alésage transversal recevant l'ergot excentrique. Cet alésage transversal découpe le logement de l'élément de coopération avec l'ergot de façon à permettre un contact direct entre l'ergot et le premier élément de coopération de façon telle que lors de sa rotation, l'ergot déplace dans un sens ou un autre le premier élément de coopération.

Dans son application pour l'assemblage des profilés servant à la construction des étagères, l'élément de fixation selon la présente invention est positionné dans un logement d'un profilé qui comporte une paroi extérieure munie d'un alésage transversal qui permet de mettre à fleur avec lui l'alésage du vantail principal qui reçoit l'ergot excentrique. Dans cette position, où les deux alésages sont superposés, on introduit l'ergot excentrique qui permet la fixation relative de l'élément de pince dans le logement du profilé, par l'emboîtement d'une partie saillante de l'ergot dans l'alésage du profilé.

Pour ajuster un élément de fixation selon la présente invention, aux largeurs variables des logements tubulaires des profilés différents, les plaques latérales reliant les éléments des coopérations avec l'ergot et la pince comportent des parties rabattues et retournées qui sont préfabriquées et qui correspondent aux largeurs normalisées.

Un élément de fixation selon la présente invention comporte à son extrémité avant des lèvres munies des surfaces en pente qui rentrent en contact avec les parties rabattues d'un deuxième profilé que l'on cherche à joindre au premier profilé, dans lequel on a logé l'élément de fixation, le positionnement et la grandeur de cette surface en pente étant tels à assurer son engagement avec lesdites parties rabattues du deuxième profilé lorsque les extrémités avant desdites lèvres aboutissent sur une paroi interne de ce deuxième profilé.

Selon une forme de réalisation de la présente invention, l'ergot excentrique comporte une partie cylindrique coopérant avec ledit alésage de la paroi du profilé tubulaire dans lequel il est logé, ainsi qu'avec l'alésage du vantail principal, une partie centrale excentrique qui coopère avec l'élément de coopération avec l'ergot et une partie cylindrique aplatie dont la dimension réduite au niveau de la région aplatie permet le passage de l'ergot au-delà de l'élément de coopération dans toute position de ce dernier.

Le palier de pivotement de l'élément de pince comporte un logement partiellement cylindrique appliqué dans le vantail principal, logement dans lequel est logé un cylindre partiel, solidaire au vantail pivotant de façon à permettre un pivotement relatif maximal entre les deux vantaux, le logement partiellement cylindrique comportant une ouverture longitudinale dont la dimension transversale est plus petite que la dimension transversale du cylindre partiel solidaire au vantail pivotant.

Nous allons maintenant décrire la présente invention plus en détail en référence aux dessins dont la

Figure 1 montre un élément de fixation selon la présente invention en vue de perspective, la

Figure 2 montre toujours en vue de perspective l'élément de pince avec les deux vantaux séparés, la

Figure 3 montre deux profilés tubulaires assemblés de façon perpendiculaire par un élément de fixation selon la présente invention, la

Figure 4 montre une coupe transversale à travers l'élément de pince muni des deux éléments de coopération selon la présente invention; et dans une première position de l'ergot excentrique correspondant à la position fermée des deux vantaux, la

Figure 5 montre les mêmes composants que la figure 4 dans la position opposée de l'ergot excentrique correspondant à l'écartement de deux vantaux, la

Figure 6 montre l'assemblage de deux profilés tubulaires d'une largeur supérieure à celle de l'élément de fixation; et la

Figure 7 montre un élément de fixation de l'état de la technique.

Avec référence à la figure 7, on a illustré un élément de fixation connu comportant deux vantaux 2 et 3, dans une position fermée, les parties arrières formant un palier de pivotement entre les deux vantaux 2 et 3.Une vis 61 pénètre le vantail supérieur de façon à s'appuyer contre la surface intérieure du vantail 3. Lors de la progression de la vis, dans le sens d'une rotation positive, il se produit un écartement de deux vantaux dont les parties avant constituées par des lèvres 12 et 13 s'engagent aux parties rabattues 47, 48 d'un profilé 44, que l'on cherche à joindre au profilé 40. Le profilé 40 est constitué de deux parois parallèles 42a, 43a, ainsi que de deux parois perpendiculaires aux premières parois dont celle qui est plus proche à l'observateur et désignée avec la référence 41. A proximité de la jonction entre le profilé 40 et le profilé 44, on a pratiqué une ouverture 60 afin de permettre l'introduction d'une vis dans le vantail 2 de façon à ce que la partie supérieure de la vis reste engagée dans l'ouverture 60 afin d'assurer le positionnement fixe de l'élément de fixation à l'intérieur du profilé tubulaire 40.

L'élément de fixation illustré en figure 7, comporte les inconvénients décrits plus haut, c'est-à-dire la nécessité d'effectuer plusieurs tours de la vis 61 afin d'assurer une bonne solidarisation entre les lèvres 12, 13 et les parties 47, 48 du profilé 44, ainsi que l'emplacement de la vis 61 à proximité de la jonction entre les profilés 40 et 44, qui peut amener à des difficultés de manipulation lors d'un encombrement par plusieurs profilés joints au même endroit.

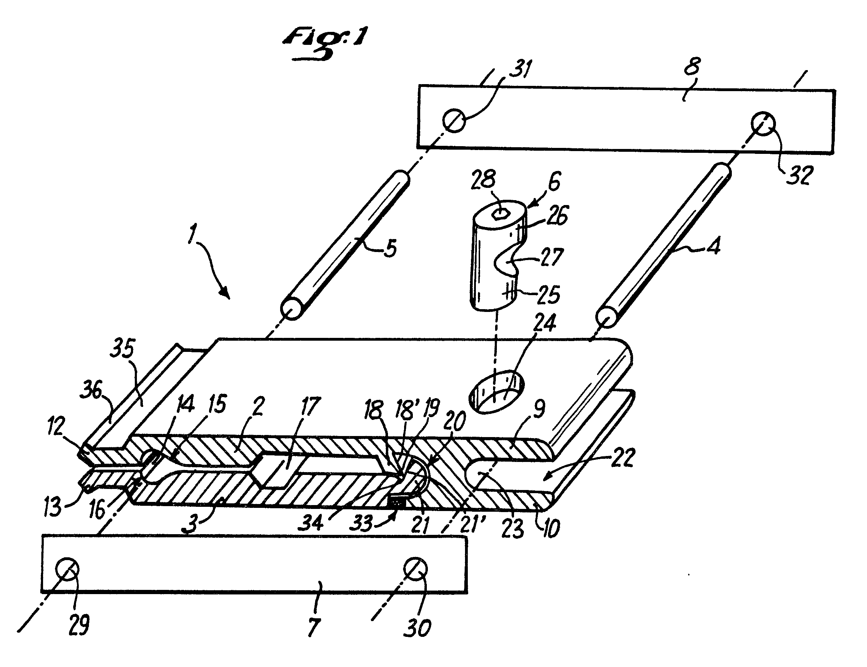

La figure 1 montre le nouvel élément de fixation selon la présente invention , dont certaines parties de l'élément de pince 1 ressemblent à l'élément de fixation de la figure 7. Cet élément de pince comporte deux vantaux 2 et 3, qui sont reliés l'un à l'autre à un palier comportant les éléments 18, 19, 20, 21 et 34 et dont la fonction est de permettre un pivotement relatif entre les deux vantaux, pivotement qui est permis par le jeu de la partie 21 partiellement cylindrique à l'intérieur du logement 20 partiellement cylindrique, jusqu'à un pivotement maximal correspondant à l'aboutement de la surface 21' de la partie 21 et la surface 18' de la partie 18. Un élément d'amortissement 33 étant prévu pour agir contre un pivotement relatif dans les sens de séparation des deux vantaux 2 et 3 pour éviter l'arrivée brusque des deux vantaux dans leur position écartée au maximum, ainsi, que pour rapprocher les deux vantaux l'un à l'autre lors de la cessation de l'application d'une force qui les écarte.

L'élément de pince 1 comporte une extrémité avant constituée par deux lèvres 12 et 13 comportant une surface de coopération 36 en pente, dont la fonction est discutée plus loin. Les lèvres 12 et 13 sont écartées du reste des vantaux par une partie étranglée 35. Dans la partie non étranglée des vantaux, proches aux lèvres, on a prévu un logement 14 comportant une partie cylindrique 16 ainsi qu'une partie défilant 15 contre laquelle peut s'appuyer la barre 5 pendant une phase d'opérations qui va être décrite plus loin. Un évidement 17 dans les deux vantaux 2 et 3 sert uniquement à l'économie de matériaux. Le palier de pivotement 18, 19, 20, 21, déjà décrit plus haut assure un pivotement exact entre les deux vantaux 2 et 3 par l'engagement du bord 19 dans la gorge 34.

Comme on peut le voir dans la figure 1, la dimension transversale de l'ouverture du logement 20, dimension mesurée entre le bord de pivotement 19 et l'élément d'amortissement 33, est inférieure à la dimension transversale de la partie 21, ce qui assure le maintien de la partie 21 à l'intérieur du logement 20, raison pour laquelle les deux vantaux 2 et 3 sont maintenus dans leur engagement en pouvant être séparés l'un de l'autre uniquement par un déplacement longitudinal (au sens de l'extrusion des profilés formant les vantaux 2 et 3). L'extrémité arrière de l'élément de pince 1 comporte une partie en U, constituée par deux extrémités 9 et 10, formant une fente 22 entre eux. Le fond de cette fente constitue un logement 23 capable de recevoir la barre 4. Cette partie en U comporte un alésage transversal 24 qui est destiné à recevoir un ergot excentrique 6, comportant une partie supérieure cylindrique 26, une partie excentrique centrale 27, et une partie inférieure cylindrique, aplatie ou de diamètre réduit, dont la partie centrale excentrique 27 coopère avec la barre 4 lors de leur mise en place à l'intérieur de l'élément de pince 1. Les barres 4 et 5 sont reliées par des plaques latérales 7 et 8 comportant des trous 29, 30,31 et 32 pour recevoir des extrémités latérales des barres 4 et 5. L'ergot 6 comporte un alésage hexagonal 28 pour permettre la mise en rotation de l'ergot moyennant une clé hexagonale.

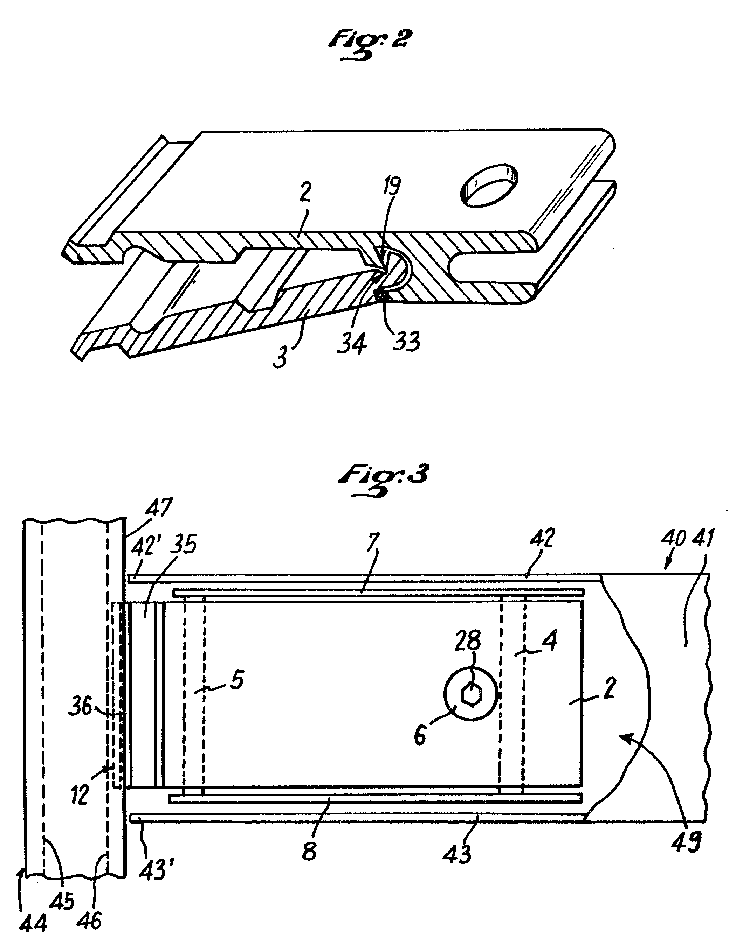

La figure 2 montre l'élément de pince qui vient d'être décrit dans une position où les vantaux 2 et 3 sont écartés l'un de l'autre, en ayant écrasé de façon flexible l'élément d'amortissement 33. Le pivotement relatif des deux vantaux 2 et 3 est effectué autour du point de contact constitué par le bord de pivotement 19, et la gorge 34.

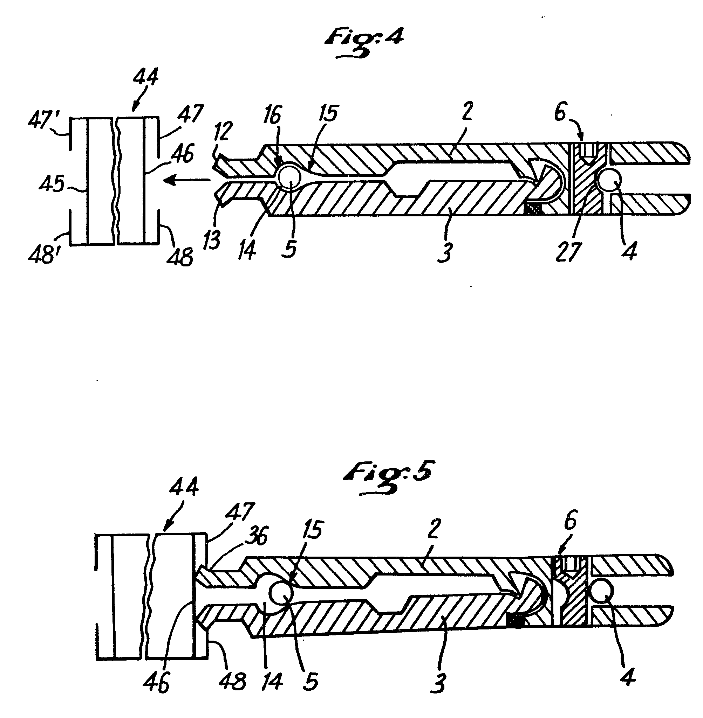

La figure 3 montre le positionnement d'un élément de fixation assemblé à l'intérieur d'un logement 49, d'un profilé tubulaire rectangulaire 40 comportant des parois 41 à 43 étant entendu que le positionnement de l'élément de fixation à l'intérieur du profilé 40 est exactement prédéterminé par la mise à fleur de l'ergot 6, avec une ouverture correspondante non représentée de la paroi 41, ouverture dont le diamètre correspond sensiblement au diamètre extérieur de la partie supérieure 26 de l'ergot 6. L'élément de fixation dont on voit uniquement le vantail principal 2 est traversé par les barres 4 et 5 qui étaient positionnées dans les logements 14, 23 illustrés dans la figure 1, barres qui sont reliées et tenues à une distance invariable l'une de l'autre, par les plaques latérales 7 et 8.

Le positionnement de l'élément de fixation à l'intérieur du profilé 40 en fonction de l'emplacement exact de l'alésage transversal dans la paroi 41 pour l'ergot 6, est choisi tel que lorsque les extrémités avant 42', 43' des parois 42, 43 du profilé 40 s'appuient sur la partie 47 du profilé 44, la surface en pente 36 de la lèvre 12 est positionnée au niveau de la partie 47 du profilé 44. Le profilé 44 comporte des parois 45 et 46 perpendiculaires aux plans de la planche de dessins et la distance entre la paroi 46 et le bord 47 est telle à assurer le chevauchement du bord 47 avec la surface en pente 36 lors de l'aboutement de la lèvre 12 sur la paroi 46. La coopération du bord 47 avec la surface en pente 36 est nécessaire pour permettre un serrage optimal entre les deux profilés 40 et 44 même en présence des tolérances de fabrication.

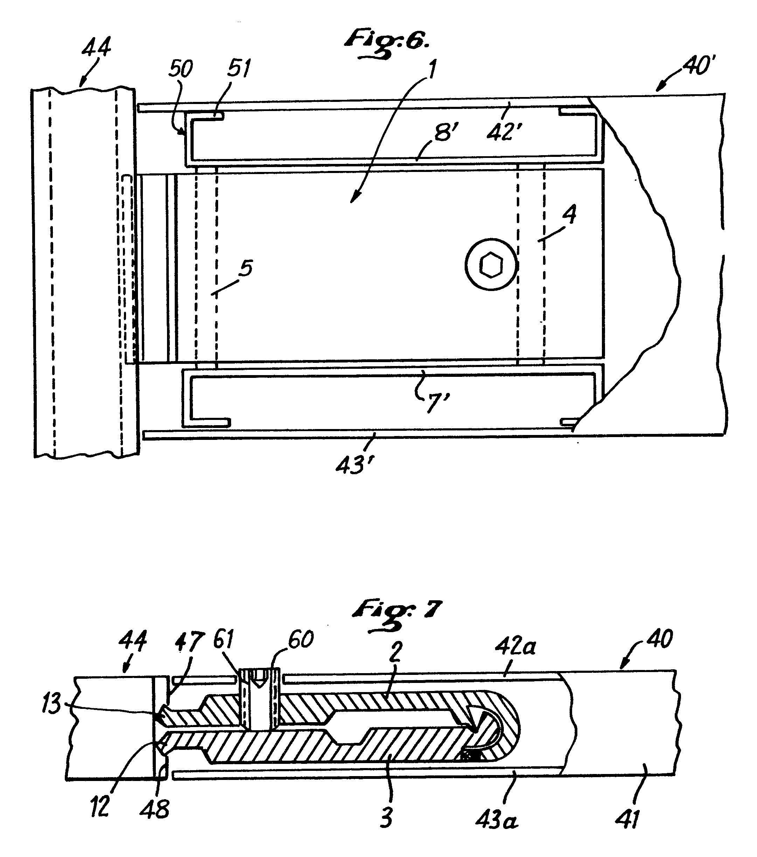

La figure 4 montre l'élément de pince muni des deux barres 4 et 5 et de l'ergot 6 dans une position où les vantaux 2 et 3 sont refermés avant que les lèvres 12 et 13 soient insérées dans le profilé 44 jusqu'à l'aboutement desdites lèvres contre la paroi 46. L'ouverture entre les parties de bord rabattu 47 et 48 est suffisante pour laisser passer lesdites lèvres 12 et 13 en position fermée. Le profilé 44 est un profilé symétrique dont la partie opposée constituée des bords rabattus 47' et 48' ainsi que d'une paroi 45 qui peuvent servir à l'engagement d'un autre élément de fixation non représenté.

Dans la position fermée des deux vantaux de l'élément de pince 1, la barre 5 se trouve dans la partie cylindrique 16 du logement 14 et la barre 4 se trouve également dans sa position avancée au maximum en direction de la partie avant de l'élément de pince constitué par les lèvres 12 et 13. Cette position des barres 4 et 5 est permise par la position angulaire de l'ergot 6 dont la partie centrale excentrique 27 est située de côté de la barre 4.

L'assemblage de l'élément de fixation comportant l'élément de pince, l'élément de repère constitué de deux barres 4 et 5 reliées par les deux plaques 7 et 8, ainsi que l'ergot 6 est effectué de la façon suivante : l'élément de repère est assemblé d'abord par l'insertion des extrémités latérales des barres 4 et 5 dans les trous des plaques latérales, dans lesquels ils sont fixés d'une façon rigide par un procédé quelconque. Ensuite, l'élément de pince est approché de façon à glisser l'extrémité avant au-delà de la barre 5 en écartant les lèvres 12 et 13 permettant de passer la barre 5 entre les deux parties étranglées 35 (voir figure 1). La barre 5 est glissée entre les deux vantaux 2 et 3 jusqu'à ce que les extrémités arrières 9 et 10 puissent être pivotées à une position dans laquelle l'élément de pince se trouve parallèle aux plaques 7 et 8, à la suite de quoi l'élément de pince est reculé par rapport à la barre 5 pour enfiler la barre 4 entre les deux parties extrêmes 9 et 10, du vantail 2. Le reculement de l'élément de pince est continué jusqu'à ce que la barre 4 prenne place dans le logement 23, ce qui correspond au positionnement de la barre 5 dans le logement 14. Dans cet état, l'élément de pince 1 muni de l'élément de repère est positionné à l'intérieur d'un profilé tubulaire 40 de façon à ce que l'alésage 24 de l'élément de pince et l'alésage correspondant dans la paroi 41 du profilé 40 soient mis à fleur, à la suite de quoi l'ergot 6 est introduit dans l'élément de fixation à travers ces deux alésages alignés.

Dans la position fermée des deux vantaux 2 et 3 comme illustré dans la figure 4, les lèvres 12 et 13 de la partie avant de l'élément de pince sont introduites dans une partie latérale d'un profilé 44, et comme illustré dans la figure 5, les deux vantaux 2 et 3 sont écartés afin d'engager les parties de bord rabattues 47 et 48 du profilé 44, avec les surfaces en pente 36.

Cet écartement des vantaux 2 et 3 est effectué au moyen d'une rotation partielle de l'ergot 6, ayant comme conséquence le reculement de la barre 4, dans une position retirée par rapport à la position illustrée dans la figure 4. Le reculement de la barre 4 provoque un reculement égal de la barre 5 reçu dans le logement 14. Lors du reculement de la barre 5, celle-ci s'appuie contre la partie défilante 15 du logement 14 provoquant ainsi l'écartement des deux vantaux 2 et 3.

La figure 6 montre l'assemblage des deux profilés tubulaires 44 et 40' au moyen d'un élément de fixation modifié, de sorte que les plaques latérales 7' et 8' comportent des adaptateurs pour compenser une largeur superieure du profilé 40'. A ces fins les plaques latérales 7' et 8' reliant les barres 4, 5 comportent des parties rabattues 50 et des parties retournées 51 qui forment un support qui s'appuie contre les parois 42' et 43' du profilé 40'.

La présente invention a été décrite à l'aide d'un exemple de réalisation sans pour autant être limitée aux formes spécifiques de cet exemple.

## Revendications

1 - Elément de fixation pour l'assemblage des profilés en structures multidimensionnelles comportant un élément de pince et un élément de serrage, l'élément de pince comprenant deux vantaux capables d'être écartés l'un de l'autre lors de l'actionnement de l'élément de serrage, l'élément de fixation étant capable d'être inséré dans un logement longitudinal d'un profilé de façon à laisser en saillie une extrémité dudit élément de fixation, extrémité comportant deux parties séparables, une solidarité à chaque vantail de l'élément de pince et capable d'être écartées l'une de l'autre lors de l'actionnement de l'élément de serrage de façon à s'engager dans une partie latérale d'un autre profilé, caractérisé en ce que, l'élément de fixation (1) comporte un système de verrouillage à quart de tour comprenant un ergot (6) excentrique coopérant avec un moyen de repère (4, 5, 7, 8) ayant un premier élément (4) de coopération avec ledit ergot (6) et un deuxième élément coopérant avec les deux vantaux afin de les écarter lors d'une rotation de l'ergot (6), les deux éléments de coopération (4, 5) étant reliés l'un avec l'autre pour assurer le maintien de leur distance relative, ledit ergot (6) étant positionné dans la partie de l'élément de pince la plus écartée de ladite extrémité saillante, le deuxième élément (4) de coopération avec l'élément de pince (1) entraînant le pivotement de deux vantaux (23) lors d'un déplacement de l'élément de repère à la suite d'une rotation de l'élément de serrage (6).

2 - Elément de fixation selon la revendication 1, caractérisé en ce que les deux éléments de coopération (4,5) sont constitués par des barres reçues dans des logements (14, 23) de l'élément de pince (1).

3 - Elément de fixation selon la revendication 2, caractérisé en ce que les deux éléments de coopération (4, 5) sont reliés l'un avec l'autre par deux plaques latérales (7, 8) solidarisées du côté et d'autres aux extrémités latérales des éléments de coopération (4, 5).

4 - Elément de fixation selon la revendication 3, caractérisé en ce que les plaques latérales (7, 8) comportent deux trous chacune pour recevoir de façon solidaire les extrémités latérales des éléments de coopération (4, 5).

5 - Elément de fixation selon l'une quelconque des revendications précédentes, caractérisé en ce que les deux vantaux (2, 3) de l'élément de pince (1) sont constitués des deux profilés complémentaires, constituant un vantail principal (2) et un vantail pivotant (3).

6 - Elément de fixation selon la revendication 5, caractérisé en ce que l'élément de pince (1) comporte un palier de pivotement permettant le pivotement de l'un de ses deux vantaux (2, 3) relative à l'autre.

7 - Elément de fixation selon la revendication 6, caractérisé en ce qu'il comporte un moyen d'amortissement (33) agissant contre l'écartement des deux vantaux.

8 - Elément de fixation selon la revendication 6 ou 7, caractérisé en ce que le palier de pivotement comporte une partie saillante (18) du vantail principal partie (18) munie d'un bord de pivotement (19) logé dans une gorge (34) du vantail pivotant.

9 - Elément de fixation selon l'une quelconque des revendications 2 à 8, caractérisé en ce que les logements (14, 23) et les barres (4, 5) sont orientés de façon parallèle par rapport au sens longitudinal des profilés formant les vantaux (2, 3).

10 - Elément de fixation selon la revendication 9, caractérisé en ce que le logement (14) recevant l'élément (5) de coopération avec l'élément de pince (1) comporte une partie cylindrique (16) située du côté proche à l'extrémité avant de l'élément de pince (1), extrémité constituée des lèvres (12, 13) et une partie défilant (15) qui coopère avec le deuxième élément de coopération (5), de façon à entraîner un pivotement relatif entre le vantail pivotant (3) et le vantail principal (2) lorsque l'élément de coopération avec la pince (1) est déplacé dans un premier sens, et permettant le rapprochement relatif de deux vantaux (2, 3) lorsque l'élément de coopération avec la pince (1) est déplacé vers le sens opposé.

11 - Elément de fixation selon la revendication 10, caractérisé en ce que le logement (23) recevant l'élément (4) de coopération avec l'ergot excentrique (6) est constitué par le fond d'une fente (22) entre deux extrémités (9, 10) d'une partie en U constituant l'extrémité arrière du vantail principal (2), l'élément de pince (1) étant poussé dans un sens ou dans l'autre lorsque l'ergot excentrique (6) est mis en rotation.

12 - Elément de fixation selon l'une quelconque des revendications précédentes, caractérisé en ce que l'extrémité arrière du vantail principal comporte un alésage transversal (24) recevant l'ergot excentrique (6), ledit alésage transversal (24) découpant le logement (23) de l'élément (4) de coopération avec l'ergot (6) de façon à permettre un contact direct entre l'ergot (6) et ledit élément (4) de coopération, de façon telle que lors de sa rotation l'ergot (6) est déplacé latéralement vis-à-vis de l'élément (4) de coopération.

13 - Elément de fixation selon l'une quelconque des revendications précédentes, caractérisé en ce qu'il est positionné dans un logement (49) d'un profilé tubulaire (40), une paroi (41) dudit profilé (40) comportant un alésage transversal permettant sa mise à fleur avec l'alésage (24) du vantail principal (2) pour recevoir ensemble et maintenir en cette position l'ergot excentrique (6) permettant ainsi la fixation relative, de l'élément de pince (1) dans le logement (49).

14 - Elément de fixation selon la revendication 3, caractérisé en ce que les plaques latérales (7, 8) comportent des parties rabattues (50) et retournées (51) adaptant la largeur de l'élément de fixation aux largeurs différentes de logement (43) des profilés différents.

15 - Elément de fixation selon l'une quelconque des revendications 10 à 14, caractérisé en ce que, les lèvres (12, 13) comportent des surfaces en pente (36) rentrant en contact avec des parties rabattues (47, 48) d'un profilé (44), le positionnement et la grandeur de la surface en pente (36) étant prévue telle, à assurer son engagement avec les parties rabattues (47, 48) lorsque les extrémités avant desdites lèvres (12, 13) aboutissent sur une paroi interne (46) dudit profilé (44).

16 - Elément de fixation selon l'une quelconque des revendications 13 à 15, caractérisé en ce que l'ergot excentrique (6) comporte une partie cylindrique (26) coopérant avec ledit alésage de la paroi (41) du profilé tubulaire (40) et avec l'alésage (24) du vantail principal (2), une partie centrale excentrique (27) coopérant avec l'élément (4) de coopération avec l'ergot (6) et une partie cylindrique aplatie (25) dont la dimension réduite au niveau de la région aplatie permet le passage de l'ergot (6) au-delà de l'élément de coopération (5) dans toute position de ce dernier.

17 - Elément de fixation selon l'une quelconque des revendications 8 à 16, caractérisé en ce que le palier de pivotement comporte un logement partiellement cylindrique (20) pratiqué dans le vantail principal, logement dans lequel est logé un cylindre partiel (21) solidaire au vantail (1) pivotant (3) de façon à permettre un pivotement rotatif maximal entre les deux vantaux (2, 3), le logement partiel cylindrique (21) comportant une ouverture longitudinale dont la dimension transversale est plus petite que la dimension transversale du cylindre partiel (20) solidaire au vantail pivotant.

_Fig.1_

*Fig. 2*

*Fig. 3*

## Fig. 4

## Fig. 5

EP 0 337 845 A1

**Fig:6.**

**Fig:7**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 623 814  (STREIB) <br> * figure 2 * <br> --- | 1 | F 16 B    7/04 |
| A | DE-A-3 426 157  (PEMSEL) <br> * figure 1 * <br> --- | 1 | |
| A | AT-B-  321 039  (SWOBODA) <br> * figure 2 * <br> --- | 1 | |
| A | GB-A-2 119 054  (EXIBELCO) <br> * figure 6 * <br> ----- | 1 | |

|  |  |
|---|---|
| | DOMAINES TECHNIQUES RECHERCHES (Int. Cl.4) |
| | F 16 B    7/00 <br> F 16 B   12/00 |

Le présent rapport a été établi pour toutes les revendications

| Lieu de la recherche | Date d'achèvement de la recherche | Examinateur |
|---|---|---|
| BERLIN | 13-06-1989 | SCHAEFFLER C.A.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

.....................................................................................................
& : membre de la même famille, document correspondant

EPO FORM 1503 03.82 (P0402)